# FASCICULE DE BREVET EUROPEEN

(11) **EP 4 045 411 B1**
(45) Date de publication et mention de la délivrance du brevet: **28.02.2024**
(21) Numéro de dépôt: 20800237.8
(22) Date de dépôt: 15.10.2020
(51) Int. Cl.: B64D 35/08, B64C 27/12, B64D 27/02

(54) **SYSTÈME PROPULSIF POUR UN HÉLICOPTÈRE**
ANTRIEBSSYSTEM FÜR EINEN HUBSCHRAUBER
PROPULSION SYSTEM FOR A HELICOPTER

(30) Priorité: 17.10.2019 FR 1911599
(43) Date de publication de la demande: 24.08.2022
(73) Titulaire: Safran Helicopter Engines, 64510 Bordes (FR)
(72) Inventeur: THIRIET, Romain, Jean, Gilbert, 77550 MOISSY-CRAMAYEL (FR); BEDRINE, Olivier, 77550 MOISSY-CRAMAYEL (FR); MOUTAUX, Antoire, Pascal, 77550 MOISSY-CRAMAYEL (FR)
(74) Mandataire: Ernest Gutmann - Yves Plasseraud S.A.S.
(86) Numéro de dépôt international: PCT/FR2020/051843
(87) Numéro de publication internationale: WO 2021/074537

(56) Documents cités:
- FR-A1- 2 933 910
- FR-A1- 2 962 404
- FR-A1- 3 027 346
- FR-A1- 3 078 057

## Description

### Domaine technique de l'invention

La présente invention concerne un système propulsif pour un hélicoptère.

### Etat de la technique antérieure

Un hélicoptère est classiquement pourvu d'un rotor principal entraînant une voilure tournante afin d'assurer sa sustentation et sa propulsion. Il est également connu d'équiper un hélicoptère avec un rotor arrière ou de queue, également appelé rotor anti-couple (RAC), permettant de contrecarrer le couple exercé par le rotor principal sur le fuselage de l'hélicoptère.

Afin d'entraîner en rotation le rotor principal et, le cas échant, le rotor anti-couple, l'hélicoptère est pourvu d'un système propulsif comportant un turbomoteur. Le turbomoteur peut comporter une turbine dite libre ou une turbine dite liée.

Dans le cas d'un turbomoteur à turbine libre, une première turbine, dite haute pression, entraîne le compresseur du moteur, tandis qu'une deuxième turbine, dite basse pression, est reliée à une boîte de réduction également dénommée Boîte de Transmission Principale ou BTP. Cette dernière permet de réduire la vitesse de rotation avant de transmettre le couple au rotor principal de l'hélicoptère. Les moteurs à turbine libre sont dits « à double arbre ».

Dans le cas d'un turbomoteur à turbine liée, tous les étages de compresseur ou de turbine sont fixés à un arbre unique. Ces moteurs sont dits « simple arbre ». Tout l'ensemble moteur est directement relié par cet axe unique à la boîte de transmission principale.

Un turbomoteur à turbine libre, bien que présentant une structure plus complexe, permet de fonctionner avec un rendement proche du rendement optimal, sur une large gamme de régimes de fonctionnement.

A l'inverse, un turbomoteur à turbine liée présente une structure moins complexe mais ne comporte qu'un point de fonctionnement optimal. Le fonctionnement du moteur à des régimes différents de ce point de fonctionnement optimal provoque une baisse importante du rendement.

Le document FR 2933910 A1 divulgue une installation motrice hybride qui comporte au moins un turbomoteur et au moins un moteur électrique. En plus, chacun des documents FR 3078057 A1 et FR 2962404 A1 divulgue une installation motrice avec un turbomoteur à turbine liée.

Du fait de ces différentes contraintes, les turbomoteurs utilisés actuellement sont des turbomoteurs à turbine libre. Comme indiqué précédemment, de tels turbomoteurs présentent une architecture complexe, nécessitant un nombre plus important de pièces ainsi qu'une masse et qu'un coût de fabrication et de maintenance plus importants.

Il est par ailleurs connu d'utiliser des systèmes de propulsion de type hybride, comportant un turbomoteur et un moteur électrique principal. Le moteur électrique principal a pour fonction d'apporter un complément de couple dans certaines phases de fonctionnement de l'hélicoptère, notamment au décollage et à l'atterrissage. Le turbomoteur est par ailleurs associé à un moteur électrique auxiliaire, de plus faible puissance que le moteur principal, ayant pour fonction d'assurer le démarrage du turbomoteur.

L'invention vise à réduire la complexité, le coût et la masse d'un tel système propulsif.

### Présentation de l'invention

A cet effet, l'invention concerne un système propulsif pour un hélicoptère, comportant un turbomoteur à turbine liée et une machine électrique apte à fonctionner en tant que moteur électrique, le turbomoteur et la machine électrique étant aptes à entraîner en rotation au moins un rotor principal destiné à être couplé à une voilure tournante, caractérisé en ce qu'il comporte des moyens de couplage et de découplage en rotation entre un rotor de la machine électrique et un rotor du turbomoteur, les moyens de couplage et de découplage étant aptes à permettre l'entraînement en rotation du rotor du turbomoteur à l'aide de la machine électrique, dans un premier état du système propulsif, et aptes à permettre de découpler en rotation le rotor du turbomoteur et le rotor de la machine électrique, dans un second état du système propulsif. L'utilisation d'un système de propulsion hybride permettant l'entraînement du rotor principal à l'aide d'un turbomoteur et/ou d'une machine électrique permet d'utiliser le turbomoteur à turbine liée de façon à fournir une puissance maximale continue proche d'un point de fonctionnement optimal du turbomoteur et de faire fonctionner la machine électrique en tant que moteur électrique, de manière à délivrer un complément de puissance au rotor principal, dans une phase de fonctionnement transitoire, telle par exemple qu'une phase de décollage ou d'atterrissage.

La machine électrique peut également être dimensionnée et utilisée pour entraîner le rotor principal en cas de panne ou de dysfonctionnement du turbomoteur. La machine électrique assure alors une fonction de redondance.

On rappelle que, dans un turbomoteur à turbine liée, tous les étages de compresseur ou de turbine sont fixés à arbre unique, formant l'arbre de sortie du turbomoteur.

Par ailleurs, le système propulsif selon l'invention permet notamment d'assurer le démarrage du turbomoteur à l'aide de la machine électrique, sans nécessiter de machine électrique supplémentaire, dédiée uniquement à la fonction de démarrage, comme cela est le cas dans l'art antérieur. Par ailleurs, la machine électrique permettant d'assurer le démarrage disposant d'une puissance élevée, le temps nécessaire pour assurer le démarrage peut être significativement réduit.

Par ailleurs, les moyens de couplage et de découplage permettent de découpler en rotation les rotors du turbomoteur et de la machine électrique, notamment en cas de panne du turbomoteur ou de la machine électrique, entraînant un couple résistant ou un blocage de l'un desdits rotors.

La machine électrique peut également être apte à fonctionner en tant que générateur électrique. Les fonctions de moteur électrique et de générateur électrique peuvent, en variante, être réalisées par deux éléments distincts.

Le rotor de la machine électrique et/ou le rotor du turbomoteur peuvent être reliés au rotor principal par l'intermédiaire d'un réducteur de vitesses.

Le réducteur de vitesses peut être notamment formé par des engrenages d'une boîte de transmission principale.

Le système propulsif peut comporter un rotor anti-couple, le turbomoteur et la machine électrique étant aptes à entraîner en rotation ledit rotor anti-couple.

Le système propulsif peut comporter deux rotors concentriques assurant la sustentation, la présence d'un rotor anti-couple n'étant alors plus nécessaire.

Le rotor de la machine électrique et/ou le rotor du turbomoteur peuvent être reliés au rotor anti-couple par l'intermédiaire d'un réducteur de vitesses.

Le turbomoteur et/ou la machine électrique peuvent être aptes à entraîner un réducteur, lequel est apte à entraîner des moyens de génération électriques permettant d'alimenter électriquement des récepteurs électriques de l'hélicoptère.

Le boîtier d'accessoires peut être apte à entraîner une pompe à huile visant à assurer la lubrification d'éléments mobiles du système propulsif notamment, ainsi qu'une pompe à carburant visant à assurer l'alimentation en carburant du turbomoteur.

Les récepteurs électriques peuvent être des éléments d'alimentation du cockpit ou de fonctions annexes de l'hélicoptère, des moyens de rechargement d'une batterie ou de moyens de stockage électrique, des moyens de refroidissement de la machine électrique, par exemple. Le rotor de la machine électrique peut être relié au rotor principal par l'intermédiaire d'un premier rapport de réduction de vitesses, le rotor du turbomoteur étant relié au rotor principal par l'intermédiaire d'un second rapport de réduction de vitesses, le premier rapport de réduction étant différent du second rapport de réduction.

Le rapport de réduction de vitesses est le rapport entre la vitesse de rotation du rotor principal et la vitesse de rotation du rotor de la machine électrique ou du rotor du turbomoteur.

Le rotor de la machine électrique peut être relié au rotor principal par l'intermédiaire d'un premier rapport de réduction de vitesses, le rotor du turbomoteur étant relié au rotor principal par l'intermédiaire d'un second rapport de réduction de vitesses, le premier rapport de réduction étant identique au second rapport de réduction.

Les axes des rotors du turbomoteur et de la machine électrique peuvent être coaxiaux ou parallèles.

L'axe du rotor principal peut être perpendiculaire ou parallèle aux axes des rotors du turbomoteur et de la machine électrique.

Les moyens de couplage et de découplage peuvent être de type passifs.

En d'autres termes, les moyens de couplage et de découplage ne comportent pas d'actionneur permettant d'assurer les changements d'état entre les fonctions de couplage et de découplage, ni de moyens de commande associés.

Lesdits moyens de couplage et de découplage ne sont ainsi par exemple pas formés par un embrayage comportant un actionneur commandé.

Une telle caractéristique permet de réduire la complexité du système propulsif et d'augmenter sa fiabilité.

Les moyens de couplage et de découplage peuvent assurer un découplage de type irréversible, de sorte qu'un couplage après découplage n'est plus possible sauf par l'intervention d'un opérateur de maintenance par exemple.

Les moyens de couplage et de découplage peuvent comporter un premier organe mobile et un second organe mobile aptes à pivoter autour d'un axe et aptes à se déplacer en translation l'un par rapport à l'autre selon ledit axe, entre une position rapprochée et une position écartée desdits organes, lesdits organes comportant des moyens de butée complémentaires aptes à coupler en rotation lesdits organes dans un premier sens de rotation du premier organe par rapport au second organe, lesdits organes comportant également une came apte à entraîner le déplacement en translation du premier organe par rapport au second organe, vers leur position écartée, à l'encontre de moyens de rappel tendant à rappeler en translation lesdits organes vers leur position rapprochée, les moyens de couplage et de découplage comportant en outre des moyens aptes à assurer une désactivation des moyens de rappel lorsque le déplacement en translation du premier organe par rapport au second organe vers leur position écartée dépasse une valeur seuil.

Une telle désactivation peut par exemple être assurée par une partie frangible des moyens de rappel, une rupture de la partie frangible intervenant lorsque le déplacement en translation dépasse ladite valeur seuil.

La came peut être formée par des surfaces en pente complémentaires ménagées sur le premier organe et le second organe.

Les moyens de couplage et de découplage peuvent comporter une première roue libre autorisant un passage d'un premier couple d'un premier arbre vers un second arbre, et une seconde roue libre autorisant un passage d'un second couple du second arbre vers le premier arbre, la seconde roue libre étant associée à un organe frangible apte à se rompre lorsque le second couple dépasse une valeur seuil.

Le premier arbre peut être relié au rotor du turbomoteur et/ou au rotor de la machine électrique. Le second arbre peut être relié au rotor principal et/ou au rotor anti-couple.

Le rotor anti-couple est entrainé par le rotor principal.

Ainsi, dans un cas de fonctionnement normal, du couple est transmis du turbomoteur ou de la machine électrique, vers le rotor principal ou vers le rotor anti-couple, au travers de la première roue libre. En cas de panne, le rotor du turbomoteur ou de la machine électrique crée un couple résistant dû à un dysfonctionnement voire un blocage du rotor, entraînant un passage du couple au travers de la seconde roue libre. Si ce couple résistant est trop élevé, alors l'organe frangible est rompu, entraînant un découplage.

Selon encore une autre variante, les moyens de couplage et de découplage comportent uniquement un organe frangible apte à se rompre lorsque le couple transmis au travers dudit organe frangible dépasse une valeur seuil.

Selon encore une autre variante, les moyens de couplage et de découplage comportent un système de crabot piloté à l'aide d'un actionneur de manière à ce que le système de crabot soit mobile entre une position de couplage en rotation et une position de découplage.

Le turbomoteur peut fournir entre 50 et 60 % de la puissance totale propulsive, le reste étant assuré par la machine électrique.

La machine électrique et le turbomoteur peuvent être lubrifiés et/ou refroidis par un circuit de fluide, par exemple d'huile, par un circuit commun à la machine électrique et au turbomoteur. Le turbomoteur peut être lubrifié ou refroidi même en cas de panne de celui-ci.

La machine électrique et/ou le turbomoteur peuvent s'étendre selon un axe horizontal ou vertical.

L'invention concerne également un hélicoptère comportant un système propulsif du type précité.

### Brève description des figures

[Fig. 1] est une vue schématique d'un système propulsif selon une première forme de réalisation de l'invention,
[Fig. 2] est une vue schématique d'un système propulsif selon une deuxième forme de réalisation de l'invention,
[Fig. 3] est une vue schématique d'un système propulsif selon une troisième forme de réalisation de l'invention,
[Fig. 4] est une vue schématique des moyens de couplage et de découplage selon une première forme de réalisation de l'invention, dans une position rapprochée des organes mobiles,
[Fig. 5] est une vue correspondant à la figure 4, illustrant une position écartée des organes mobiles,
[Fig. 6] est une vue schématique des moyens de couplage et de découplage selon une seconde forme de réalisation de l'invention.

### Description détaillée de l'invention

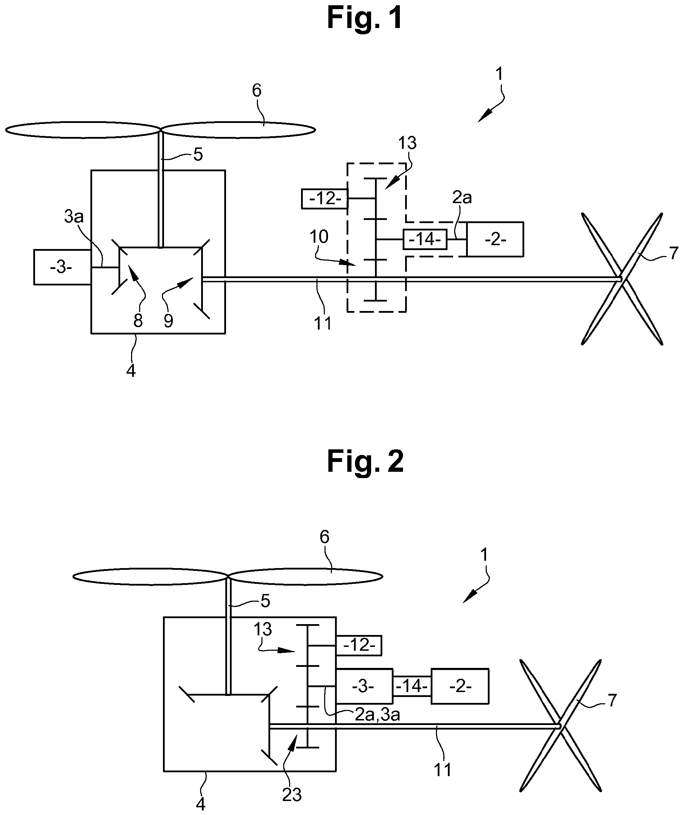

La figure 1 illustre un système propulsif 1 pour un hélicoptère, selon une première forme de réalisation de l'invention. Celui-ci comporte un turbomoteur 2 à turbine liée et une machine électrique 3 apte à fonctionner en tant que moteur électrique.

Le turbomoteur 2 et la machine électrique 3 sont aptes à entraîner en rotation, par l'intermédiaire d'une boîte de transmission principale 4, un rotor principal 5, destiné à être couplé à une voilure tournante 6 formant un rotor sustentateur unique, et un rotor anti-couple 7 situé à l'extrémité d'une poutre à l'arrière d'un fuselage de l'hélicoptère.

Bien entendu l'invention n'est pas limitée à une telle architecture et peut également être utilisée dans le cas de deux rotors concentriques assurant la sustentation, la présence d'un rotor anti-couple n'étant alors plus nécessaire.

En particulier, le rotor 3a de la machine électrique 3 est relié au rotor principal 5 par l'intermédiaire d'un premier réducteur de vitesses formé d'engrenages 8 de la boîte de transmission principale offrant un premier rapport de vitesses entre la vitesse de rotation du rotor principal 5 et la vitesse de rotation du rotor 3a de la machine électrique 3. Par ailleurs, le rotor 2a du turbomoteur 2 est relié au rotor principal 5 par l'intermédiaire d'un second réducteur de vitesses offrant un second rapport de vitesses entre la vitesse de rotation du rotor principal 5 et la vitesse de rotation du rotor 3a de la machine électrique 3. Le second réducteur de vitesses est formé d'engrenages 9 de la boîte de transmission principale 4 et d'engrenages 10 d'un train d'engrenages d'un réducteur 13, situés entre le rotor du turbomoteur 2 et un arbre de transmission intermédiaire 11 coopérant avec la boîte de transmission principale 4. Le premier rapport de vitesses est différent du second rapport de vitesses. Le système de propulsion 1 permet également l'entraînement d'au moins un accessoire 12 par l'intermédiaire des engrenages 10 du réducteur 13.

L'arbre de transmission intermédiaire 11 permet également d'actionner le rotor anti-couple 7. Des moyens de couplage et de découplage 14 sont intercalés entre le rotor du turbomoteur 2 et les engrenages 10 du réducteur 13. Ceux-ci sont de type passifs, c'est-à-dire ne comportent pas d'actionneur permettant d'assurer les changements d'état entre les fonctions de couplage et de découplage, ni de moyens de commande associés.

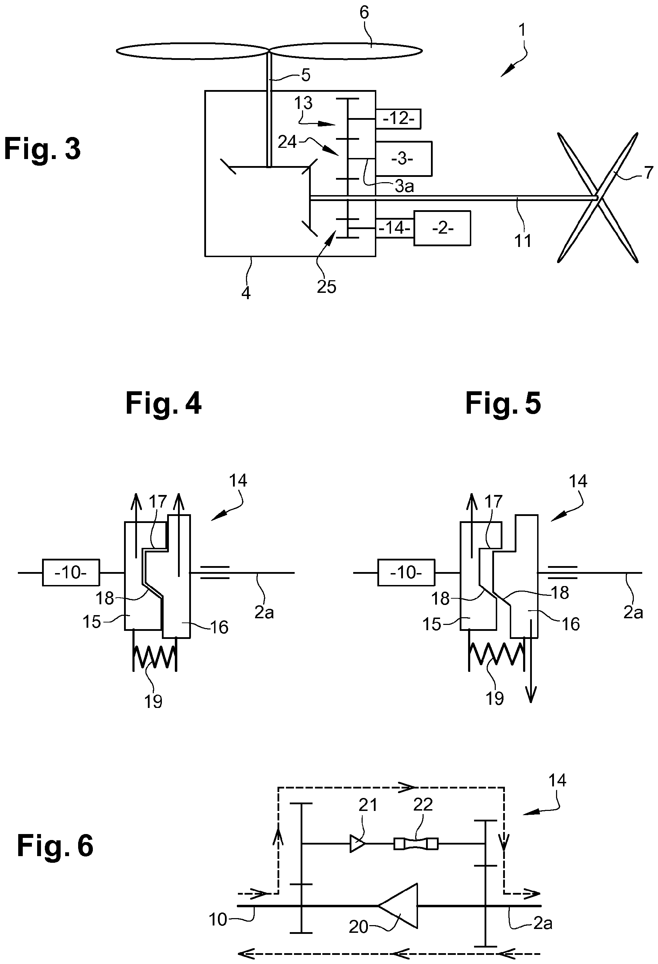

Comme illustré aux figures 4 et 5, les moyens de couplage et de découplage 14 comportent un premier organe mobile 15 relié aux engrenages 10 du réducteur 13, et un second organe mobile 16 relié au rotor 2a du turbomoteur 2, aptes à pivoter autour de l'axe dudit rotor 2a et aptes à se déplacer en translation l'un par rapport à l'autre selon ledit axe, entre une position rapprochée (figure 4) et une position écartée (figure 5) desdits organes 15, 16. Les organes 15, 16 comportant des moyens de butée complémentaires 17 aptes à coupler en rotation lesdits organes 15, 16 dans un premier sens de rotation du premier organe par rapport au second organe, lesdits organes 15, 16 comportant également des surfaces obliques complémentaires 18 formant une came apte à entraîner le déplacement en translation du premier organe 15 par rapport au second organe 16, vers leur position écartée, à l'encontre de moyens de rappel 19 tendant à rappeler en translation lesdits organes 15, 16 vers leur position rapprochée.

Les moyens de couplage et de découplage 14 comportent en outre des moyens aptes à assurer une désactivation des moyens de rappel 19 lorsque le déplacement en translation du premier organe 15 par rapport au second organe 16 vers leur position écartée dépasse une valeur seuil. Une telle désactivation peut par exemple être assurée par une partie frangible des moyens de rappel 19, une rupture de la partie frangible intervenant lorsque le déplacement en translation dépasse ladite valeur seuil.

Ainsi dans un cas de fonctionnement normal correspondant à la figure 4, le turbomoteur 2 peut entraîner en rotation le reste du système propulsif, en particulier le rotor principal 5 et le rotor anti-rotation. Une telle forme de réalisation autorise également le transfert d'un couple de démarrage de la machine électrique 3 vers le turbomoteur 2, au travers des organes 15, 16. En effet, dans un tel cas, le couple transmis n'est pas suffisant pour écarter suffisamment les premier et second organes 15, 16 selon l'axe X de sorte que le seuil de rupture n'est pas atteint.

En cas de panne du turbomoteur 2, par exemple en cas de blocage du rotor 2a du turbomoteur 2, ledit rotor 2a exerce un couple résistant élevé, supérieur à la valeur seuil précitée, de façon à provoquer la désactivation des moyens de rappel 19 et le découplage des organes 15, 16, isolant ainsi le turbomoteur 2 du reste du système propulsif 1.

La figure 6 illustre une autre forme de réalisation des moyens de couplage et de découplage, une première roue libre 20 autorisant un passage d'un premier couple d'un premier arbre relié au rotor 2a du turbomoteur 2 vers un second arbre relié au reste du système propulsif, en particulier au réducteur 13, et une seconde roue libre 21 autorisant un passage d'un second couple du second arbre vers le premier arbre, la seconde roue libre 21 étant associée à un organe frangible 22 apte à se rompre lorsque le second couple dépasse une valeur seuil.

Ainsi, dans un cas de fonctionnement normal, le couple peut être transmis du turbomoteur 2, vers le rotor principal 5 ou vers le rotor anti-couple 7, au travers de la première roue libre 20. En cas de panne, le rotor 2a du turbomoteur 2 crée un couple résistant dû à un dysfonctionnement voire un blocage du rotor 2a, entraînant un passage du couple au travers de la seconde roue libre 21. Si ce couple résistant est trop élevé, alors l'organe frangible 22 est rompu, entraînant un découplage du turbomoteur 2 par rapport au reste du système de propulsion 1.

On notera que le rapport de réduction aux bornes de la roue libre 21 est défini afin de s'assurer qu'en fonctionnement nominal, la roue libre 21 est déconnectée, du fait d'une différence de vitesses de rotation entre l'entrée et la sortie.

Une telle forme de réalisation autorise également le transfert d'un couple de démarrage de la machine électrique 3 vers le turbomoteur 2, au travers de la seconde roue libre 21. En effet, dans un tel cas, le couple transmis pour assurer le démarrage n'est pas suffisant pour rompre l'organe frangible 22.

La figure 2 illustre un système propulsif 1 selon une deuxième forme de réalisation, qui diffère de celle exposée précédemment en ce que le rotor 2a du turbomoteur 2 et le rotor 3a de la machine électrique sont, soit reliés à un même arbre, soit reliés à deux arbres coaxiaux solidaires en rotation d'un même engrenage 23 d'un train d'engrenages spécifique 13 faisant office de réducteur et disposé dans un carter commun avec le carter de la boîte de transmission principale 4. Une telle forme de réalisation permet de réduire la masse et l'encombrement du système propulsif 1. Une telle forme nécessite cependant que le rotor 2a du turbomoteur 2 et le rotor 3a de la machine électrique 3 ont sensiblement le même régime de fonctionnement, c'est-à-dire la même vitesse de rotation.

Dans cette forme de réalisation également, des accessoires 12 peuvent être fixés au carter de la boîte de transmission principale 4 et être couplés à des engrenages du train d'engrenages 13. Une telle caractéristique n'est pas dépendante de la forme de réalisation utilisée.

La figure 3 illustre un système propulsif selon une troisième forme de réalisation, qui diffère de celle exposée précédemment en référence à la figure 2 en ce que le rotor 3a de la machine électrique 3 et le rotor 2a du turbomoteur 2 sont parallèles et décalés. Le rotor 3a de la machine électrique 3 est relié à l'arbre de transmission 11 par l'intermédiaire d'engrenages 24 du train d'engrenages spécifique 13 faisant office de réducteur, le rotor 2a du turbomoteur 2 étant relié à l'arbre de transmission 11 par l'intermédiaire des moyens de couplage et de découplage 14 et d'engrenages 25 du train d'engrenages 13.

## Revendications

1. Système propulsif (1) pour un hélicoptère, comportant un turbomoteur (2) et une machine électrique (3) apte à fonctionner en tant que moteur électrique, le turbomoteur (2) et la machine électrique (3) étant aptes à entraîner en rotation au moins un rotor principal (5) destiné à être couplé à une voilure (6) tournante, le système propulsif comporte des moyens de couplage et de découplage (14) en rotation entre un rotor (3a) de la machine électrique (3) et un rotor (2a) du turbomoteur (2), les moyens de couplage et de découplage (14) étant aptes à permettre l'entraînement en rotation du rotor (2a) du turbomoteur (2) à l'aide de la machine électrique (3), dans un premier état du système propulsif (1), et aptes à permettre de découpler en rotation le rotor (2a) du turbomoteur (2) et le rotor (3a) de la machine électrique (3), dans un second état du système propulsif (1), **caractérisé en ce que** le turbomoteur est un turbomoteur à turbine liée.

2. Système propulsif (1) selon la revendication 1, **caractérisé en ce que** le rotor (3a) de la machine électrique (3) et/ou le rotor (2a) du turbomoteur (2) sont reliés au rotor principal (5) par l'intermédiaire d'un réducteur de vitesses.

3. Système propulsif (1) selon la revendication 1 ou 2, **caractérisé en ce qu'**il comporte un rotor anti-couple (7), le turbomoteur (2) et la machine électrique (3) étant aptes à entraîner en rotation ledit rotor anti-couple.

4. Système propulsif (1) selon l'une des revendications 1 à 3, **caractérisé en ce que** le turbomoteur (2) et/ou la machine électrique (3) sont aptes à entraîner un réducteur (13), lequel est apte à entraîner des moyens de génération électriques permettant d'alimenter électriquement des récepteurs électriques de l'hélicoptère.

5. Système propulsif (1) selon l'une des revendications 1 à 4, **caractérisé en ce que** le rotor (3a) de la machine électrique (3) est relié au rotor principal (5) par l'intermédiaire d'un premier rapport de réduction de vitesses, le rotor (2a) du turbomoteur (2) étant relié au rotor principal (5) par l'intermédiaire d'un second rapport de réduction de vitesses, le premier rapport de réduction étant différent du second rapport de réduction.

6. Système propulsif (1) selon l'une des revendications 1 à 4, **caractérisé en ce que** le rotor (3a) de la machine électrique (3) est relié au rotor principal (5) par l'intermédiaire d'un premier rapport de réduction de vitesses, le rotor (2a) du turbomoteur (2) étant relié au rotor principal (5) par l'intermédiaire d'un second rapport de réduction de vitesses, le premier rapport de réduction étant identique au second rapport de réduction.

7. Système propulsif (1) selon l'une des revendications 1 à 6, **caractérisé en ce que** les moyens de couplage et de découplage (14) sont de type passifs.

8. Système propulsif (1) selon l'une des revendications 1 à 7, **caractérisé en ce que** les moyens de couplage et de découplage (14) comportent un premier organe mobile (15) et un second organe mobile (16) aptes à pivoter autour d'un axe et aptes à se déplacer en translation l'un par rapport à l'autre selon ledit axe, entre une position rapprochée et une position écartée desdits organes (15, 16), lesdits organes (15, 16) comportant des moyens de butée complémentaires (17) aptes à coupler en rotation lesdits organes (15, 16) dans un premier sens de rotation du premier organe (15) par rapport au second organe (16), lesdits organes (15, 16) comportant également une came (18) apte à entraîner le déplacement en translation du premier organe (15) par rapport au second organe (16), vers leur position écartée, à l'encontre de moyens de rappel (19) tendant à rappeler en translation lesdits organes (15, 16) vers leur position rapprochée, les moyens de couplage et de découplage (14) comportant en outre des moyens aptes à assurer une désactivation des moyens de rappel (19) lorsque le déplacement en translation du premier organe (15) par rapport au second organe (16) vers leur position écartée dépasse une valeur seuil.

9. Système propulsif (1) selon l'une des revendications 1 à 7, **caractérisé en ce que** les moyens de couplage et de découplage (14) comportent une première roue libre (20) autorisant un passage d'un premier couple d'un premier arbre vers un second arbre, et une seconde roue libre (21) autorisant un passage d'un second couple du second arbre vers le premier arbre, la seconde roue libre (21) étant associée à un organe frangible (22) apte à se rompre lorsque le second couple dépasse une valeur seuil.

10. Hélicoptère comportant un système propulsif (1) selon l'une des revendications 1 à 9.

## Patentansprüche

1. Antriebssystem (1) für einen Hubschrauber, enthaltend einen Turbomotor (2) und eine elektrische Maschine (3), die als Elektromotor betrieben werden kann, wobei der Turbomotor (2) und die elektrische Maschine (3) zumindest einen Hauptrotor (5) in Drehung versetzen können, der dazu bestimmt ist, mit einem Drehflügel (6) gekoppelt zu werden,
wobei das Antriebssystem Mittel zur Drehkopplung und -entkopplung (14) zwischen einem Rotor (3a) der elektrischen Maschine (3) und einem Rotor (2a) des Turbomotors (2) umfasst, wobei die Kopplungs- und Entkopplungsmittel (14) dazu geeignet sind, in einem ersten Zustand des Antriebssystems (1) den Drehantrieb des Rotors (2a) des Turbomotors (2) mit Hilfe der elektrischen Maschine (3) zu ermöglichen, und dazu geeignet sind, in einem zweiten Zustand des Antriebssystems (1) die Drehentkopplung des Rotors (2a) des Turbomotors (2) und des Rotors (3a) der elektrischen Maschine (3) zu ermöglichen,
**dadurch gekennzeichnet, dass** der Turbomotor ein Turbomotor mit mechanisch gekoppelter Turbine ist.

2. Antriebssystem (1) nach Anspruch 1,
**dadurch gekennzeichnet, dass** der Rotor (3a) der elektrischen Maschine (3) und/oder der Rotor (2a) des Turbomotors (2) über ein Untersetzungsgetriebe mit dem Hauptrotor (5) verbunden sind.

3. Antriebssystem (1) nach Anspruch 1 oder 2,
**dadurch gekennzeichnet, dass** es einen Heckrotor (7) umfasst, wobei der Turbomotor (2) und die elektrische Maschine (3) dazu geeignet sind, den Heckrotor in Drehung zu versetzen.

4. Antriebssystem (1) nach einem der Ansprüche 1 bis 3,
**dadurch gekennzeichnet, dass** der Turbomotor (2) und/oder die elektrische Maschine (3) dazu geeignet sind, ein Getriebe (13) anzutreiben, das elektrische Generatormittel antreiben kann, über die elektrische Verbraucher des Hubschraubers elektrisch versorgt werden können.

5. Antriebssystem (1) nach einem der Ansprüche 1 bis 4,
**dadurch gekennzeichnet, dass** der Rotor (3a) der elektrischen Maschine (3) über ein erstes Drehzahluntersetzungsverhältnis mit dem Hauptrotor (5) verbunden ist, wobei der Rotor (2a) des Turbomotors (2) über ein zweites Drehzahluntersetzungsverhältnis mit dem Hauptrotor (5) verbunden ist, wobei sich das erste Untersetzungsverhältnis von dem zweiten Untersetzungsverhältnis unterscheidet.

6. Antriebssystem (1) nach einem der Ansprüche 1 bis 4,
**dadurch gekennzeichnet, dass** der Rotor (3a) der elektrischen Maschine (3) über ein erstes Drehzahluntersetzungsverhältnis mit dem Hauptrotor (5) verbunden ist, wobei der Rotor (2a) des Turbomotors (2) über ein zweites Drehzahluntersetzungsverhältnis mit dem Hauptrotor (5) verbunden ist, wobei das erste Untersetzungsverhältnis gleich dem zweiten Untersetzungsverhältnis ist.

7. Antriebssystem (1) nach einem der Ansprüche 1 bis 6,
**dadurch gekennzeichnet, dass** die Kopplungs- und Entkopplungsmittel (14) vom passiven Typ sind.

8. Antriebssystem (1) nach einem der Ansprüche 1 bis 7,
**dadurch gekennzeichnet, dass** die Kopplungs- und Entkopplungsmittel (14) eine erste bewegliche Einrichtung (15) und eine zweite bewegliche Einrichtung (16) umfassen, die um eine Achse schwenkbar und geeignet sind, sich zueinander entlang der Achse translatorisch zu verschieben, und zwar zwischen einer angenäherten Position und einer entfernten Position der Einrichtungen (15, 16), wobei die Einrichtungen (15, 16) komplementäre Anschlagmittel (17) umfassen, die geeignet sind, die Einrichtungen (15, 16) in einer ersten Drehrichtung der ersten Einrichtung (15) in Bezug auf die zweite Einrichtung (16) drehbar zu koppeln, wobei die Einrichtungen (15, 16) auch einen Nocken (18) umfassen, der dazu geeignet ist, die translatorische Verschiebung der ersten Einrichtung (15) in Bezug auf die zweite Einrichtung (16) in ihre entfernte Position entgegen Rückstellmitteln (19) zu bewirken, die bestrebt sind, die Einrichtungen (15, 16) in ihre angenäherte Position zurückzustellen, wobei die Kopplungs- und Entkopplungsmittel (14) ferner Mittel umfassen, die dazu geeignet sind, eine Deaktivierung der Rückstellmittel (19) sicherzustellen, wenn die translatorische Verschiebung der ersten Einrichtung (15) in Bezug auf die zweite Einrichtung (16) in ihre entfernte Position einen Schwellenwert überschreitet.

9. Antriebssystem (1) nach einem der Ansprüche 1 bis 7,
**dadurch gekennzeichnet, dass** die Kopplungs- und Entkopplungsmittel (14) einen ersten Freilauf (20), der eine Übertragung eines ersten Drehmoments von einer ersten Welle auf eine zweite Welle zulässt, und einen zweiten Freilauf (21), der eine Übertragung eines zweiten Drehmoments von der zweiten Welle auf die erste Welle zulässt, umfassen, wobei dem zweiten Freilauf (21) eine Sollbrucheinrichtung (22) zugeordnet ist, die brechen kann, wenn das zweite Drehmoment einen Schwellenwert überschreitet.

10. Hubschrauber mit einem Antriebssystem (1) nach einem der Ansprüche 1 bis 9.

## Claims

1. A propulsion system (1) for a helicopter, comprising a turboshaft engine (2) and an electric machine (3) capable of operating as an electric motor, the turboshaft engine (2) and the electric machine (3) being capable of driving in rotation at least one main rotor (5) intended to be coupled to a rotating wing (6), the propulsion system comprising means of coupling and decoupling (14) in rotation between a rotor (3a) of the electric machine (3) and a rotor (2a) of the turboshaft engine (2), the means of coupling and decoupling (14) being capable of allowing the rotor (2a) of the turboshaft engine (2) to be driven in rotation with the aid of the electric machine (3), in a first state of the propulsion system (1), and capable of allowing the rotor (2a) of the turboshaft engine (2) and the rotor (3a) of the electric machine (3) to be decoupled in rotation, in a second state of the propulsion system (1), **characterized in that** the turboshaft engine is a turboshaft engine with a linked turbine.

2. A propulsion system (1) according to claim 1, **characterised in that** the rotor (3a) of the electric machine (3) and/or the rotor (2a) of the turboshaft engine (2) are connected to the main rotor (5) via a speed reducer.

3. A propulsion system (1) according to claim 1 or 2, **characterised in that** it comprises an anti-torque rotor (7), the turboshaft engine (2) and the electric machine (3) being capable of driving said anti-torque rotor in rotation.

4. A propulsion system (1) according to one of claims 1 to 3, **characterised in that** the turboshaft engine (2) and/or the electric machine (3) are capable of driving a speed reducer (13), which is able to drive means of electrical generation for electrically supplying electric receivers of the helicopter.

5. A propulsion system (1) according to one of claims 1 to 4, **characterized in that** the rotor (3a) of the electric machine (3) is connected to the main rotor (5) via a first speed-reduction ratio, the rotor (2a) of the turboshaft engine (2) being connected to the main rotor (5) via a second speed-reduction ratio, the first reduction ratio being different from the second reduction ratio.

6. A propulsion system (1) according to one of claims 1 to 4, **characterized in that** the rotor (3a) of the electric machine (3) is connected to the main rotor (5) via a first speed-reduction ratio, the rotor (2a) of the turboshaft engine (2) being connected to the main rotor (5) via a second speed-reduction ratio, the first reduction ratio being different from the second reduction ratio.

7. A propulsion system (1) according to any of claims 1 to 6, **characterised in that** the means of coupling and decoupling (14) are passive.

8. A propulsion system (1) according to one of claims 1 to 7, **characterised in that** the means of coupling and decoupling (14) comprise a first mobile member (15) and a second mobile member (16) capable of pivoting about an axis and capable of moving in translation with respect to each other along said axis, between a Closed position and a Open position of said members (15,16), said members (15, 16) comprising complementary means of end-stop (17) capable of coupling said members (15, 16) in rotation in a first direction of rotation of the first member (15) with respect to the second member (16), said members (15, 16) also comprising a cam (18) capable of causing the translational displacement of the first member (15) with respect to the second member (16), towards their Open position, counter to means of return (19) tending to return said members (15, 16) towards their Closed position, the means of coupling and decoupling (14) also comprising means capable of ensuring deactivation of the means of return (19) when the translational displacement of the first member (15) with respect to the second member (16) towards their Open position exceeds a threshold value.

9. A propulsion system (1) according to one of claims 1 to 7, **characterized in that** the means of coupling and decoupling (14) comprise a first freewheel (20) allowing a first torque to pass from a first shaft to a second shaft, and a second freewheel (21) allowing a second torque to pass from the second shaft to the first shaft, the second freewheel (21) being associated with a frangible member (22) which could break when the second torque exceeds a threshold value.

10. A helicopter comprising a propulsion system (1) according to any of claims 1 to 9.
